(19) Europäisches Patentamt
European Patent Office
Office européen des brevets

(11) **EP 3 258 220 B1**

(12) **EUROPÄISCHE PATENTSCHRIFT**

(45) Veröffentlichungstag und Bekanntmachung des Hinweises auf die Patenterteilung:
**15.08.2018   Patentblatt 2018/33**

(51) Int Cl.:
***G01D 5/38*** *(2006.01)*

(21) Anmeldenummer: **17173708.3**

(22) Anmeldetag: **31.05.2017**

(54) **OPTISCHE POSITIONSMESSEINRICHTUNG**

OPTICAL POSITIONING DEVICE

DISPOSITIF OPTIQUE DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.06.2016   DE 102016210434**

(43) Veröffentlichungstag der Anmeldung:
**20.12.2017   Patentblatt 2017/51**

(73) Patentinhaber: **Dr. Johannes Heidenhain GmbH 83301 Traunreut (DE)**

(72) Erfinder: **SÄNDIG, Karsten 83349 Palling (DE)**

(56) Entgegenhaltungen:
**EP-A2- 0 446 691       EP-A2- 2 848 899 US-A1- 2012 050 748    US-A1- 2013 114 061**

**Beschreibung**

GEBIET DER TECHNIK

Die vorliegende Erfindung betrifft eine optische Positionsmesseinrichtung gemäß Anspruch 1.

STAND DER TECHNIK

In bekannten Positionsmesseinrichtungen zur Erfassung der Position von zwei zueinander beweglichen Objekten wird üblicherweise die Position einer Abtasteinheit relativ zu einer Maßverkörperung mit einer darauf angeordneten Messteilung entlang der Teilungsrichtung der Maßverkörperung bestimmt, wobei die Teilungsrichtung der Messrichtung entspricht; Abtasteinheit und Maßverkörperung sind hierbei jeweils mit einem der beiden beweglichen Objekte verbunden. Der sogenannte Empfindlichkeitsvektor der Positionsmesseinrichtung, der die jeweilige effektive Messrichtung bezeichnet, ist in bekannten Vorrichtungen üblicherweise parallel zur Oberfläche der Maßverkörperung orientiert.

Desweiteren sind Positionsmesseinrichtungen bekannt, deren Empfindlichkeitsvektor schräg zur Oberfläche einer Maßverkörperung mit einer reflektiven Messteilung orientiert ist. Hierzu sei etwa auf die EP 1 762 828 A2 der Anmelderin verwiesen. Die geneigte Ausrichtung des Empfindlichkeitsvektors wird in einer derartigen Positionsmesseinrichtung durch eine asymmetrische Ausbildung des interferentiellen Abtaststrahlengangs sichergestellt. In entsprechenden Abtaststrahlengängen wird ein einfallendes Strahlenbündel in mindestens zwei Teilstrahlenbündel aufgespalten, die schließlich zur interferierenden Überlagerung gebracht werden. Mit Hilfe derartiger Positionsmesseinrichtungen können Positionsinformationen bezüglich einer Relativbewegung von Abtasteinheit und Maßverkörperung entlang einer lateralen Mess- bzw. Verschiebungsrichtung als auch entlang einer vertikalen Mess- bzw. Verschiebungsrichtung gewonnen werden. Das heißt, mit Hilfe einer derartigen Positionsmesseinrichtung können Positionsänderungen entlang zweier translatorischer Bewegungs-Freiheitsgrade erfasst werden. Die Weglängen der interferierenden Teilstrahlenbündel sind in einer solchen Positionsmesseinrichtung üblicherweise nur in einem Nenn-Abtastabstand zwischen Abtasteinheit und Maßverkörperung gleich lang. Wird die Maßverkörperung oder die Abtasteinheit aus diesem Nenn-Abtastabstand heraus bewegt, so ergeben sich unterschiedliche Weglängen in den zur Interferenz gelangten Teilstrahlenbündeln. Eine eventuelle Änderung der Wellenlänge der verwendeten Lichtquelle beeinflusst damit die Phase der interferierenden Teilstrahlenbündel und somit auch die ermittelte Positionsinformation. Man bezeichnet die Abtastoptiken derartiger Positionsmesseinrichtungen deshalb als chromatisch. Die darin eingesetzte Lichtquelle muss deswegen eine ausreichende Kohärenzlänge und ein äußerst geringes Phasenrauschen aufweisen. Um dies zu gewährleisten ist eine aufwändige Stabilisierung einer derartigen Lichtquelle nötig, wodurch diese entsprechend teuer ist.

In der deutschen Patentanmeldung Nr. 10 2015 203 188.8 der Anmelderin, von der bei der Bildung des Oberbegriffs von Patentanspruch 1 der vorliegenden Anmeldung ausgegangen wurde, wird eine optische Positionsmesseinrichtung vorgeschlagen, die die vorgenannten Probleme löst. Die entsprechende Positionsmesseinrichtung besitzt einen geneigten Empfindlichkeitsvektor und ist bei allen zulässigen Abtastabständen unempfindlich gegenüber Wellenlängenänderungen. Die Positionsmesseinrichtung umfasst dabei eine Maßverkörperung, die mit einem der beiden Objekte verbunden ist und eine Messteilung mit einer periodischen Anordnung von Teilungsbereichen entlang mindestens einer Teilungsrichtung aufweist. Ferner ist eine mit dem anderen Objekt verbundene Abtasteinheit mit mehreren optischen Elementen vorgesehen, die beweglich relativ zur Maßverkörperung angeordnet ist. Über die Anordnung und Ausbildung der optischen Elemente der Abtasteinheit resultiert ein Abtaststrahlengang, in dem zur Interferenz gelangende Teilstrahlenbündel in Bezug auf eine Symmetrieebene spiegelsymmetrisch propagieren und entweder V-förmig auf die Maßverkörperung einfallen und/oder eine V-förmige Rückreflexion von der Maßverkörperung erfahren. Die Symmetrieebene ist um einen definierten Kippwinkel um eine Drehachse verkippt, welche parallel zur Oberfläche der Maßverkörperung orientiert ist und sich senkrecht zur Teilungsrichtung erstreckt. Zur Signalerzeugung werden in dieser Positionsmesseinrichtung Teilstrahlenbündel zur Interferenz gebracht, die aus nicht-symmetrischen Beugungsordnungen an der Messteilung resultieren. Die entsprechende Messteilung ist daher vorzugsweise auf eine hohe Beugungseffizienz der entsprechenden Beugungsordnungen zu optimieren. US2012/0050748 zeigt eine weitere bekannte optische Positionsmesseinrichtung die den Oberbegriff des Anspruchs 1 aufweist.

ZUSAMMENFASSUNG DER ERFINDUNG

Der vorliegenden Erfindung liegt die Aufgabe zugrunde, eine gattungsgemäße optische Positionsmesseinrichtung zu schaffen, deren Messteilung auf eine hohe Beugungseffizienz der zur Signalerzeugung genutzten Beugungsordnungen optimiert ist.

Diese Aufgabe wird erfindungsgemäß durch eine optische Positionsmesseinrichtung mit den Merkmalen des Anspruchs 1 gelöst. Vorteilhafte Ausführungen der erfindungsgemäßen optischen Positionsmesseinrichtung ergeben sich aus den Maßnahmen, die in den abhängigen Ansprüchen aufgeführt sind.

Die erfindungsgemäße optische Positionsmesseinrichtung zur Erfassung der Position von zwei relativ zueinander beweglichen Objekten umfasst einerseits eine Maßverkörperung, die mit einem der beiden Objekte verbunden ist und eine Messteilung mit einer periodischen Anordnung von Teilungsbereichen entlang mindestens einer Teilungsrichtung aufweist. Andererseits ist eine mit dem anderen Objekt verbundene Abtasteinheit mit mehreren optischen Elementen vorgesehen, die beweglich relativ zur Maßverkörperung angeordnet ist. Über die Anordnung und Ausbildung der optischen Elemente der Abtasteinheit resultiert ein Abtaststrahlengang, in dem zur Interferenz gelangende Teilstrahlenbündel in Bezug auf eine Symmetrieebene spiegelsymmetrisch propagieren und entweder V-förmig auf die Maßverkörperung einfallen und/oder eine V-förmige Rückreflexion von der Maßverkörperung erfahren. Die Symmetrieebene ist um einen definierten Kippwinkel um eine Drehachse verkippt, welche parallel zur Oberfläche der Maßverkörperung orientiert ist und sich senkrecht zur Teilungsrichtung erstreckt. Die Messteilung weist dabei eine Überstruktur auf und besitzt innerhalb einer Teilungsperiode mehr als zwei Gittersprungstellen, wobei die Gittersprungstellen innerhalb einer Teilungsperiode unsymmetrisch angeordnet sind.

Es kann vorgesehen werden, dass die Messteilung innerhalb einer Teilungsperiode eine gerade Anzahl von Gittersprungstellen besitzt.

Ferner ist möglich, dass die Messteilung derart ausgebildet ist, dass Teilstrahlenbündel zur Interferenz gelangen, die aus nicht-symmetrischen Beugungsordnungen an der Messteilung resultieren und die Teilungsperiode der Messteilung gemäß

$$d'_{MÜ} = d_{MÜ} \cdot (n - m) / (2 \cos \alpha)$$

gewählt ist, mit

$d_{MÜ}$ := Teilungsperiode der Messteilung mit Überstruktur für den in-plane-Betrieb
$d'_{MÜ}$ := Teilungsperiode der Messteilung mit Überstruktur für den out-of-plane Betrieb
$\alpha$ := Kippwinkel
$n, m$ := ....-2, -1, 0, +1, +2,....

Es kann vorgesehen sein, dass Teilstrahlenbündel zur Interferenz gelangen, die aus einer der folgenden Kombinationen von Beugungsordnungen an der Messteilung (12') resultieren

+1. / -2. Beugungsordnung,
+2. / -3. Beugungsordnung,
+1. / -3. Beugungsordnung,
+3. / -1. Beugungsordnung,
+1. / 0. Beugungsordnung,
-1. / 0. Beugungsordnung.

Mit Vorteil ist die Messteilung als binäres Reflexions-Phasengitter ausgebildet:
Das Reflexions-Phasengitter kann einen Phasenhub von $\lambda/4$ aufweisen.

In einer möglichen Ausführungsform ist vorgesehen, dass Teilstrahlenbündel zur Interferenz gelangen, die aus einer Kombination der +1. Beugungsordnung und der -2. Beugungsordnung an der Messteilung resultieren und wobei bei einer genutzten Lichtwellenlänge $\lambda = 850$nm die Teilungsperiode der Messteilung, der Kippwinkel der Symmetrieebene sowie die Überstrukturparameter der Messteilung mit vier Gittersprungstellen pro Teilungsperiode folgendermaßen gewählt sind

$d'_{MÜ} = 3.080\mu$m
$\alpha = 4.143°$
$a = 0.06 \cdot d'_{MÜ}$ (Abstand zwischen erster Gittersprungstelle und zweiter Gittersprungstelle)
$b = 0.31 \cdot d'_{MÜ}$ (Abstand zwischen zweiter Gittersprungstelle und dritter Gittersprungstelle)
$c = 0.39 \cdot d'_{MÜ}$ (Abstand zwischen dritter Gittersprungstelle und vierter Gittersprungstelle)

In einer weiteren möglichen Ausführungsform ist vorgesehen, dass Teilstrahlenbündel zur Interferenz gelangen, die aus einer Kombination der +2. Beugungsordnung und der -3. Beugungsordnung an der Messteilung resultieren und wobei bei einer genutzten Lichtwellenlänge $\lambda = 850$nm die Teilungsperiode der Messteilung, der Kippwinkel der Symmetrieebene sowie die Überstrukturparameter der Messteilung mit vier Gittersprungstellen pro Teilungsperiode folgendermaßen gewählt sind

$d'_{MÜ} = 5.124 \mu m$

$\alpha = 2.488°$

a = 0.19 · $d_{MÜ}$ (Abstand zwischen erster Gittersprungstelle und zweiter Gittersprungstelle)

b = 0.20 · $d_{MÜ}$ (Abstand zwischen zweiter Gittersprungstelle und dritter Gittersprungstelle)

c = 0.19 · $d_{MÜ}$ (Abstand zwischen dritter Gittersprungstelle und vierter Gittersprungstelle)

In einer weiteren möglichen Ausführungsform ist vorgesehen, dass Teilstrahlenbündel zur Interferenz gelangen, die aus einer Kombination der +1. Beugungsordnung und der -3. Beugungsordnung an der Messteilung resultieren und wobei bei einer genutzten Lichtwellenlänge $\lambda$ = 850nm die Teilungsperiode der Messteilung, der Kippwinkel der Symmetrieebene sowie die Überstrukturparameter der Messteilung mit vier Gittersprungstellen pro Teilungsperiode folgendermaßen gewählt sind

$d_{MÜ} = 4.120 \mu m$

$\alpha = 6.201°$

a = 0.08 · $d_{MÜ}$ (Abstand zwischen erster Gittersprungstelle und zweiter Gittersprungstelle)

b = 0.21 · $d_{MÜ}$ (Abstand zwischen zweiter Gittersprungstelle und dritter Gittersprungstelle)

c = 0.5 · $d_{MÜ}$ (Abstand zwischen dritter Gittersprungstelle und vierter Gittersprungstelle)

Die erfindungsgemäße optische Positionsmesseinrichtung besitzt aufgrund der gewählten Ausbildung der Messteilung als Überstrukturgitter insbesondere eine hohe Abtasteffizienz und damit eine hohe Signalstärke der erzeugten positionsabhängigen Signale. Hinzu kommt, dass eine größere Toleranz in Bezug auf den Verkippwinkel vorliegt, in dem die Abtasteinheit gegenüber der Maßverkörperung montiert werden muss, damit die Positionsmesseinrichtung ordnungsgemäß funktioniert. Außerdem ergeben sich abhängig von der konkreten Ausbildung der Messteilung unterschiedliche Kippwinkel; d.h. durch die entsprechende Ausbildung der Messteilung kann der für die jeweilige Anbau-Gegebenheit geeignetste Kippwinkel ausgewählt werden kann.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

## KURZE BESCHREIBUNG DER ZEICHNUNGEN

Es zeigt

Figur 1a-1c    jeweils eine schematisierte Schnittansicht der Abtasteinheit eines Ausführungsbeispiels der erfindungsgemäßen optischen Positionsmesseinrichtung, die in einer Positionsmesseinrichtung eingesetzt wird, die einen Empfindlichkeitsvektor parallel zur Oberfläche der abgetasteten Maßverkörperung besitzt;

Figur 2a-2c    jeweils eine schematisierte Schnittansicht des Ausführungsbeispiels der erfindungsgemäßen optischen Positionsmesseinrichtung mit geneigtem Empfindlichkeitsvektor;

Figur 3    eine schematisierte Teil-Schnittansicht der Messteilung aus dem Ausführungsbeispiel der Figuren 2a - 2c.

## BESCHREIBUNG DER AUSFÜHRUNGSFORMEN

Bevor anhand der Figuren ein Ausführungsbeispiel der erfindungsgemäßen optischen Positionsmesseinrichtung im Detail beschrieben wird, seien nachfolgend zunächst einige Begrifflichkeiten im Zusammenhang mit der vorliegenden Erfindung erläutert.

Dazu sei noch einmal auf Abtastoptiken von Positionsmesseinrichtungen verwiesen, bei denen im Messbetrieb der Empfindlichkeitsvektor parallel zur Oberfläche der Maßverkörperung orientiert ist. In derartigen Abtastoptiken wird üblicherweise ein von einer Lichtquelle emittiertes Strahlenbündel in zwei Teilstrahlenbündel aufgespalten. Die beiden Teilstrahlenbündel werden an der Messteilung der Maßverkörperung in unterschiedliche Beugungsordnungen gebeugt und schließlich überlagert und zur Interferenz gebracht. Es lassen sich auf diese Art und Weise zueinander phasenverschobene Abtastsignale erzeugen, aus denen durch Inkrementalzählung und Interpolation Positionswerte gebildet werden. Einige solcher Abtastoptiken erzeugen Teilstrahlenbündel, die von der Aufspaltung bis zur Überlagerung spiegelsymmetrisch in Bezug auf eine Symmetrieebene verlaufen. Die Symmetrieebenen derartiger Abtaststrahlengänge stehen in dieser Betriebsart dabei senkrecht auf der Maßverkörperungsoberfläche und damit auch senkrecht zur Teilungsrichtung der Messteilung der Maßverkörperung. Die Teilungsrichtung entspricht hierbei dem Gittervektor der Messteilung, der immer senkrecht zu den Gitterlinien der Messteilung orientiert ist; nachfolgend werden die Begriffe Teilungsrichtung und Gittervektor daher gleichwertig nebeneinander verwendet. Aufgrund der Spiegelsymmetrie des Abtaststrahlengangs resultieren gleichlange Propagationswege der Teilstrahlenbündel zwischen Aufspaltung und Wiedervereinigung. Die Abtastoptik ist damit achromatisch, d.h. die Wellenlänge der Lichtquelle sowie deren spektrale Verteilung haben keinen Einfluss auf die Phase und den Modulationsgrad der erzeugten Abtastsignale.

Abtastoptiken, in denen die zur Interferenz gelangenden Teilstrahlenbündel spiegelsymmetrisch in Bezug auf eine Symmetrieebene propagieren, können darüber hinaus auch so ausgebildet werden, dass der sogenannte neutrale Drehpunkt der Abtastung auf der Maßverkörperung liegt. Als neutraler Drehpunkt wird hierbei derjenige Punkt im Raum bezeichnet, um den entweder die Abtasteinheit oder die Maßverkörperung gekippt werden kann, ohne dass sich der angezeigte Positionswert ändert. Die zurückgelegten Propagationswege der beiden Teilstrahlenbündel zwischen Aufspaltung und Wiedervereinigung bleiben bei einer Kippung um den neutralen Drehpunkt gleich. Derartige Abtastoptiken mit spiegelsymmetrischen Teilstrahlengängen und neutralem Drehpunkt auf der Maßverkörperung werden im Folgenden auch als symmetrisch-V-förmige Abtastoptiken bezeichnet. Diese Bezeichnung umschreibt somit all diejenigen Abtastoptiken, deren zur Interferenz gelangenden zwei Teilstrahlenbündel zum einen spiegelsymmetrisch in Bezug auf eine Symmetrieebene propagieren und zum anderen auf einen gemeinsamen Abtastort auf der Maßverkörperung V-förmig einfallen und/oder von ihm eine V-förmige Rückreflexion von der Maßverkörperung erfahren. Dabei müssen nur die Auftrefforte beider Teilstrahlenbündel auf der Maßverkörperung entlang der Teilungsrichtung bzw. entlang des Gittervektors nahezu identisch sein, ein Versatz senkrecht zum Gittervektor bzw. entlang der Längsrichtung der strichförmigen Teilungsbereiche ist unerheblich.

Neben derartigen Abtastoptiken mit gleichen oder nahezu gleichen Auftrefforten der beiden Teilstrahlenbündel auf der Maßverkörperung entlang des Gittervektors gibt es weitere symmetrische Abtastoptiken, deren neutraler Drehpunkt auf der Maßverkörperung liegt. In der Europäischen Patentanmeldung EP 2848899 A2 der Anmelderin findet sich eine allgemeine Beschreibung des Zusammenhangs zwischen einem beliebigen Strahlengang einer Abtastoptik und der zugehörigen Lage des neutralen Drehpunkts. Auf Grundlage dieser Beschreibung können weitere Abtastoptiken mit symmetrischem Strahlengang angegeben werden, deren neutraler Drehpunkt auf der Maßverkörperung liegt. Alle diese Abtastoptiken werden nachfolgend auch als symmetrisch-V-förmige Abtastoptiken bezeichnet.

Im Betrieb einer solchen symmetrisch-V-förmigen Abtastoptik mit parallelem Empfindlichkeitsvektor zur Maßverkörperungsoberfläche wird die Abtasteinheit so zur Maßverkörperung mit der Teilungsperiode $d_{MÜ}$ ausgerichtet, dass die oben erwähnte Symmetrieebene senkrecht zur Maßverkörperungsoberfläche und auch senkrecht zum Gittervektor der Messteilung der Maßverkörperung steht. Dies wird als parallele Ausrichtung von Abtasteinheit und Maßverkörperung bezeichnet.

Ein Aspekt der vorliegenden Erfindung besteht nunmehr darin, eine solche symmetrisch-V-förmige Abtastoptik bzw. die zugehörige Symmetrieebene um einen bestimmten Kippwinkel $\alpha$ um eine Drehachse zu verkippen, die parallel zur Oberfläche der Maßverkörperung orientiert ist und sich senkrecht zum Gittervektor der Messteilung der Maßverkörperung erstreckt, d.h. parallel zur Längserstreckungsrichtung der Teilungsbereiche der Messteilung. Durch geeignete weitere Maßnahmen wird sichergestellt, dass der Abtaststrahlengang in Bezug auf die Abtasteinheit identisch zum Abtaststrahlengang im unverkippten Zustand ist. Die zusätzlichen Maßnahmen umfassen neben der Wahl eines geeigneten Kippwinkels $\alpha$ die Wahl einer passenden Teilungsperiode der Messteilung, die Wahl weiterer Messteilungsparameter sowie eine Wahl geeigneter, zur Interferenz gelangender Teilstrahlenbündel, die aus nicht-symmetrischen Beugungsordnungen an der Messteilung resultieren.

Eine detaillierte Beschreibung dieser Zusammenhänge erfolgt im Anschluss anhand eines Ausführungsbeispiels der erfindungsgemäßen optischen Positionsmesseinrichtung.

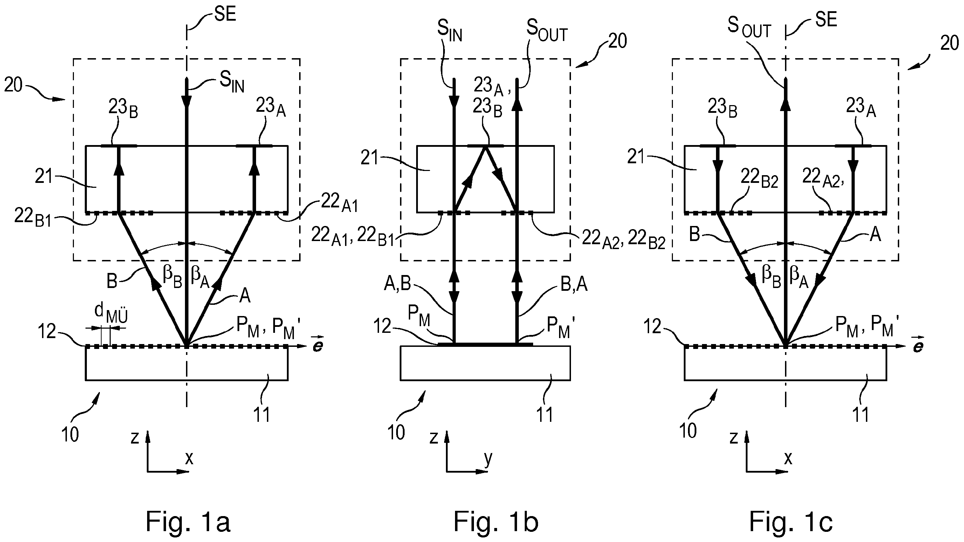

In den Figuren 1a, 1b und 1c ist der Abtaststrahlengang einer bekannten optischen Positionsmesseinrichtung mit symmetrisch-V-förmiger Abtastoptik in verschiedenen Ansichten gezeigt. Der Empfindlichkeitsvektor $\vec{e}$ dieser Abtastoptik ist hier parallel zur Maßverkörperungsoberfläche und parallel zum Gittervektor der Messteilung bzw. einer Teilungsrichtung x orientiert; nachfolgend sei im Zusammenhang mit einer derartigen Orientierung des Empfindlichkeitsvektors $\vec{e}$ auch von einem sogenannten in-plane-Betrieb der entsprechenden Positionsmesseinrichtung die Rede. In Figur 1a ist eine Ansicht des Strahlverlaufs in der xz-Ebene vom von einer - nicht gezeigten - Lichtquelle her einfallenden Strahlenbündel $S_{IN}$ bis zu den Reflektoren $23_A$, $23_B$ dargestellt, in Figur 1c der Strahlverlauf in der gleichen Ebene von den Reflektoren $23_A$, $23_B$ bis zum austretenden Signalstrahlenbündel $S_{OUT}$ mit den überlagerten Teilstrahlenbündeln, die in Richtung einer - ebenfalls nicht dargestellten - Detektoreinheit propagieren; Figur 1b zeigt den vollständigen Abtaststrahlengang in der yz-Ebene.

Die in diesen Figuren dargestellte optische Positionsmesseinrichtung umfasst eine Maßverkörperung 10, die sich entlang der Teilungsrichtung x erstreckt, sowie eine Abtasteinheit 20, die mindestens entlang der Teilungsrichtung x relativ beweglich zur Maßverkörperung 10 angeordnet ist. Die Maßverkörperung 10 und die Abtasteinheit 20 sind jeweils mit nicht in den Figuren dargestellten Objekten verbunden, beispielsweise mit relativ zueinander beweglichen Maschinenkomponenten. Mit Hilfe der über die Positionsmesseinrichtung erzeugten Abtastsignale kann eine nachgeordnete Maschinensteuerung die räumliche Positionierung dieser Maschinenkomponenten steuern.

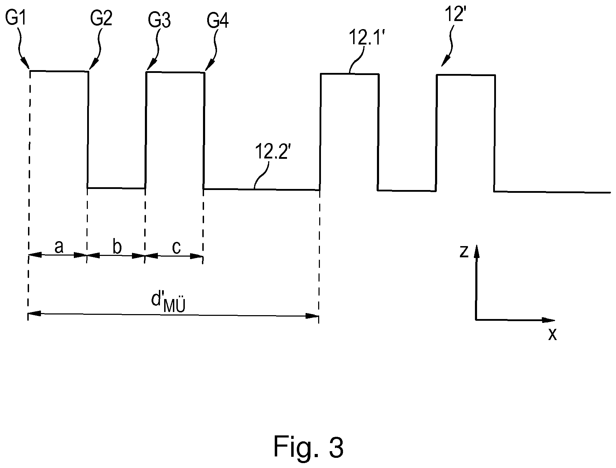

Die Maßverkörperung 10 besteht aus einem Teilungsträger 11, auf dessen Oberfläche eine Messteilung 12 angeordnet ist, die eine Anordnung von strichförmigen Teilungsbereichen entlang eines Gittervektors bzw. entlang einer Teilungsrichtung x umfasst; die Längserstreckungsrichtung der Teilungsbereiche entspricht in den Figuren der y-Richtung. Die Messteilung 12 ist im vorliegenden Ausführungsbeispiel als binäres bzw. zweistufiges Reflexions-Phasengitter mit der Teilungsperiode $d_{MÜ}$ sowie einem Phasenhub von $\lambda/4$, bzw. in Reflexion $\lambda/2$, ausgebildet und sieht eine aufeinanderfolgende Anordnung von Teilungsbereichen mit unterschiedlichen phasenschiebenden Wirkungen für das darauf einfallende Licht vor. Im Hinblick auf eine besonders vorteilhafte Ausbildung der Messteilung 12 in Form eines sog. Überstruktur-Gitters sei insbesondere auf die nachfolgende Beschreibung der Figur 3 verwiesen.

Auf Seiten der Abtasteinheit 20 ist in den Figuren von den verschiedenen darin angeordneten optischen Elementen i.w. nur eine transparente Abtastplatte 21 sowie die auf deren Oberseite angeordneten Reflektoren $23_A$, $23_B$ bzw. die auf deren Unterseite angeordneten Abtastgitter $22_{A1}$, $22_{A2}$, $22_{B1}$, $22_{B2}$ dargestellt. Nicht gezeigt sind hingegen die Lichtquelle sowie die Detektoreinheit, die grundsätzlich ebenfalls in der Abtasteinheit 20 angeordnet sein können. Es ist alternativ aber auch möglich, diese Elemente räumlich entfernt von der Abtasteinheit 20 zu platzieren und mittels Lichtwellenleitern mit der Abtasteinheit 20 zu verbinden, über die das einfallende Strahlenbündel $S_{IN}$ bzw. das austretende Signalstrahlenbündel $S_{OUT}$ dann jeweils übertragen werden.

Wie nachfolgend anhand der Detail-Beschreibungen der verschiedenen Abtaststrahlengänge ersichtlich wird, ist über die Anordnung und Ausbildung der verschiedenen optischen Elemente in der Abtasteinheit 20 jeweils gewährleistet, dass ein Abtaststrahlengang resultiert, in dem zur Interferenz gelangende Teilstrahlenbündel A, B in Bezug auf eine Symmetrieebene SE spiegelsymmetrisch propagieren. Dabei fallen diese entweder V-förmig auf die Maßverkörperung 10 ein und/oder erfahren eine V-förmige Rückreflexion von der Maßverkörperung 10.

Das von der - nicht gezeigten - Lichtquelle her einfallende Strahlenbündel $S_{IN}$ trifft nach dem Durchlaufen der transparenten Abtastplatte 21 am ersten Auftreffort $P_M$ senkrecht auf die Messteilung 12 der Maßverkörperung 10. Dort resultiert eine Aufspaltung in zwei V-förmig zur Abtasteinheit 20 zurückreflektierte Teilstrahlenbündel A, B. Das einfallende Strahlenbündel $S_{IN}$ wird dabei in die symmetrischen Beugungsordnungen $n_{A1}$ = +1 und $n_{B1}$ = -1 und damit in die beiden Teilstrahlenbündel A, B aufgespalten, die identische Beugungs- bzw. Ablenkwinkel $\beta_A = \beta_B$ gegenüber der Einfallsrichtung des einfallenden Strahlenbündels $S_{IN}$ aufweisen. Hierbei gilt:

$$\sin(\beta_A) = \sin(\beta_B) = \frac{\lambda}{d_{MÜ}} \qquad \text{(Gl. 1)}$$

mit:

$\beta_A$:=	Ablenkwinkel des Teilstrahlenbündels A gegenüber der Einfallsrichtung des einfallenden Strahlenbündels
$\beta_B$:=	Ablenkwinkel des Teilstrahlenbündels B gegenüber der Einfallsrichtung des einfallenden Strahlenbündels
$\lambda$ :=	Lichtwellenlänge
$d_{MÜ}$ :=	Teilungsperiode der Messteilung

Die aufgespaltenen Teilstrahlenbündel A und B propagieren dann jeweils zu ersten Abtastgittern $22_{A1}$ bzw. $22_{B1}$ auf der Unterseite der transparenten Abtastplatte 21 und durchtreten diese. Die beiden ersten Abtastgitter $22_{A1}$ bzw. $22_{B1}$ vereinen dabei mehrere optische Funktionen in einer gemeinsamen, diffraktiven Struktur. So werden die Teilstrahlenbündel A, B in der xz-Projektion (Fig. 1a) jeweils wieder durch eine antiparallel zur Einfallsrichtung orientierte Ablenkwirkung wieder parallel zur optischen Achse in z-Richtung gelenkt. In der yz-Projektion (Fig. 1b) werden die Teilstrahlenbündel A, B durch eine Zylinderlinsenfunktion auf die Reflektoren $23_A$, $23_B$ auf der Oberseite der Abtastplatte 21 fokussiert, wobei lediglich senkrecht zur Richtung x des Gittervektors der Messteilung bzw. entlang deren Teilungsrichtung x eine fokussierende Wirkung resultiert. Die derart abgelenkten und fokussierten Teilstrahlenbündel A, B treffen dann jeweils auf einen Reflektor $23_A$, $23_B$ und erfahren dort eine Rückreflexion in Richtung der Maßverkörperung 10. Nach der Reflexion an den Reflektoren $23_A$, $23_B$ durchtreten die beiden Teilstrahlenbündel A, B die beiden zweiten Abtastgitter $22_{A2}$, $22_{B2}$, welche ebenfalls auf der Unterseite der Abtastplatte 21 angeordnet sind. Die beiden zweiten Abtastgitter $22_{A2}$, $22_{B2}$ vereinen äquivalente Funktionen wie die beiden ersten Abtastgitter $22_{A1}$, $22_{B1}$. So rekollimieren sie die Teilstrahlenbündel A, B wieder durch eine Zylinderlinsenfunktion in der yz-Projektion (Fig. 1b) und lenken sie in der xz-Projektion (Fig. 1c) wieder zurück auf einen gemeinsamen Auftreffort $P_M$' auf der Maßverkörperung 10 bzw. der Messteilung 12. Die beiden Teilstrahlenbündel A, B propagieren dabei V-förmig in Richtung der Maßverkörperung 10 bzw. in Richtung eines zweiten Auftrefforts $P_M$'. Dort werden sie durch erneute Beugung in symmetrischen Beugungsordnungen $n_{A2}$ = +1 und $n_{B2}$ = -1 überlagert und zur Interferenz gebracht und propagieren im Signalstrahlenbündel $S_{OUT}$ in Richtung der Abtasteinheit 20 und einer - nicht dargestellten - Detektoreinheit, wo mehrere periodische, phasenverschobene Abtastsignale aus dem Signalstrahlenbündel $S_{OUT}$ gewonnen werden.

Wie aus den Figuren 1a, 1b ersichtlich, verlaufen beide Teilstrahlenbündel A, B zwischen Aufspaltung und Wiedervereinigung spiegelsymmetrisch zu einer Symmetrieebene SE, die hier identisch mit der yz-Ebene aus Figur 1b ist, und werden jeweils an den selben Auftrefforten $P_M$ bzw. $P_M'$ von der Messteilung 12 gebeugt. Damit liegt der neutrale Drehpunkt dieser Abtastoptik auf der Maßverkörperung 10, d.h. die Abtastoptik ist symmetrisch-V-förmig. Die zur Interferenz gelangenden Teilstrahlenbündel A, B propagieren in Bezug auf die Symmetrieebene SE spiegelsymmetrisch, erfahren zunächst eine V-förmige Rückreflexion von der Maßverkörperung 10 und fallen dann V-förmig auf die Maßverkörperung 10 ein.

Die Signalperiode SP der mit dieser Positionsmesseinrichtung erzeugten periodischen Abtastsignale beträgt im dargestellten in-plane-Betrieb SP = $d_{MÜ}$/4. Der Empfindlichkeitsvektor $\vec{e}$ ist parallel zum in Richtung x verlaufenden Gittervektor der Messteilung 12 orientiert.

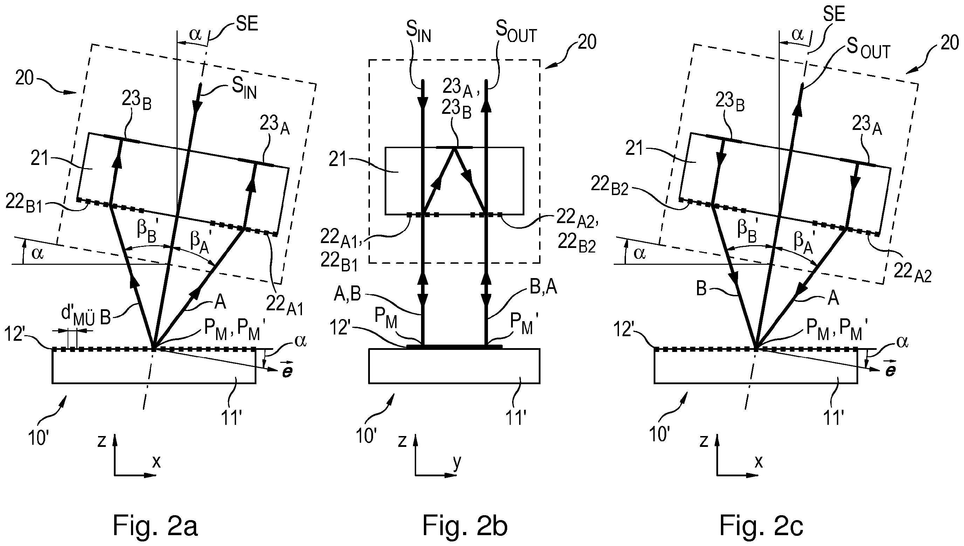

In den Figuren 2a, 2b und 2c ist nunmehr ein Ausführungsbeispiel der erfindungsgemäßen optischen Positionsmesseinrichtung gezeigt, die in einem sogenannten out-of-plane-Betrieb arbeitet und wie aus den Figuren 2a, 2c ersichtlich einen gegenüber der Maßverkörperungsoberfläche geneigten Empfindlichkeitsvektor $\vec{e}$ aufweist. Es lassen sich damit also positionsabhängige Abtastsignale sowohl für die Relativbewegung von Abtasteinheit und Maßverkörperung entlang der Teilungsrichtung x bzw. entlang des in x-Richtung orientierten Gittervektors der Messteilung 12 als auch entlang der hierzu senkrechten Richtung z erzeugen. Die erfindungsgemäße Positionsmesseinrichtung nutzt hierbei die gleiche Abtastoptik, d.h. die gleiche Abtasteinheit 20, wie die bekannte Positionsmesseinrichtung aus den Figuren 1a - 1c. Im Unterschied dazu ist hier jedoch die Abtasteinheit 20 bzw. die Symmetrieebene SE - wie aus den Figuren 2a und 2c ersichtlich - um einen Kippwinkel $\alpha$ um eine Drehachse in y-Richtung verkippt angeordnet; entsprechend verkippt und damit senkrecht zur Symmetrieebene SE ist dann auch die in der Abtasteinheit 20 vorgesehene Abtastplatte 21 angeordnet. Die entsprechende Drehachse ist parallel zur Oberfläche der Maßverkörperung 10' orientiert und erstreckt sich senkrecht zum in x-Richtung orientierten Gittervektor der Messteilung 12. Zudem ist die Teilungsperiode $d_{MÜ}'$ der Messteilung 12' der erfindungsgemäßen Positionsmesseinrichtung mit $d_{MÜ}' \neq d_{MÜ}$ unterschiedlich zur Teilungsperiode $d_{MÜ}$ der Messteilung 12 der vorstehend erläuterten Positionsmesseinrichtung aus den Figuren 1a - 1c gewählt. Desweiteren werden auch andere resultierende Beugungsordnungen der Messteilung 12' zur Aufspaltung und Überlagerung der beiden Teilstrahlenbündel A, B verwendet als im Fall der konventionellen Positionsmesseinrichtung gemäß den Figuren 1a - 1c. Der Verlauf des Abtaststrahlengangs entspricht bezüglich des Durchlaufens und Beaufschlagens der verschiedenen optischen Elemente dem beschriebenen Abtaststrahlengang der Positionsmesseinrichtung aus den Figuren 1a - 1c.

Die neben dem Kippwinkel $\alpha$ darüber hinaus vorgesehenen Unterschiede zwischen der erfindungsgemäßen Positionsmesseinrichtung und der bekannten Vorrichtung aus den Figuren 1a - 1c seien nachfolgend im Detail erläutert.

So wird im dargestellten Ausführungsbeispiel der erfindungsgemäßen Positionsmesseinrichtung das Teilstrahlenbündel A zweimal in +3. Beugungsordnung an der Messteilung 12' gebeugt ($n_{A1} = n_{A2} = +3$), während das Teilstrahlenbündel B zweimal in -1. Beugungsordnung abgelenkt wird ($n_{B1} = n_{B2} = -1$). Der Kippwinkel $\alpha$ und die Teilungsperiode $d_{MÜ}'$ der Messteilung 12' sind nun derart gewählt, dass der Strahlengang der Abtastoptik abgesehen von der Verkippung der Symmetrieebene SE um den Kippwinkel $\alpha$ identisch zum Strahlengang des vorstehend erläuterten in-plane-Betriebs bleibt. Das bedeutet, dass die Beugungs- bzw. Ablenkwinkel $\beta_A'$ und $\beta_B'$ bei der Beugung an der Messteilung 12' der erfindungsgemäßen Positionsmesseinrichtung identisch zu den Ablenkwinkeln $\beta_A = \beta_B$ der Positionsmesseinrichtung im in-plane-Betrieb aus den Figuren 1a - 1c sein müssen:

$$\beta_A' = \beta_B' = \beta_A = \beta_B \quad \text{(Gl. 2)}$$

mit:

$\beta'_A$:= Ablenkwinkel des Teilstrahlenbündels A gegenüber der Einfallsrichtung des einfallenden Strahlenbündels im out-of-plane-Betrieb

$\beta'_B$:= Ablenkwinkel des Teilstrahlenbündels B gegenüber der Einfallsrichtung des einfallenden Strahlenbündels im out-of-plane-Betrieb

$\beta_A$:= Ablenkwinkel des Teilstrahlenbündels A gegenüber der Einfallsrichtung des einfallenden Strahlenbündels im in-plane-Betrieb

$\beta_B$:= Ablenkwinkel des Teilstrahlenbündels B gegenüber der Einfallsrichtung des einfallenden Strahlenbündels im in-plane-Betrieb

Unter Berücksichtigung des Kippwinkels $\alpha$ ergeben sich folgende Ablenkwinkel $\beta_A'$ bzw. $\beta_B'$ für die Beugung an der Messteilung 12' mit der Teilungsperiode $d_{MÜ}'$ in den Beugungsordnungen $n_{A1}$ bzw. $n_{B1}$:

$$-\sin(\alpha) + n_{A1} \cdot \frac{\lambda}{d'_{M\ddot{U}}} = \sin(\beta'_A + \alpha) \quad \text{(Gl. 3a)}$$

$$-\sin(\alpha) + n_{B1} \cdot \frac{\lambda}{d'_{M\ddot{U}}} = \sin(-\beta'_B + \alpha) \quad \text{(Gl. 3b)}$$

mit:

| | |
|---|---|
| $\alpha :=$ | Kippwinkel |
| $n_{A1} :=$ | Beugungsordnung des Teilstrahlenbündels A bei erster Beugung an der Messteilung |
| $n_{B1} :=$ | Beugungsordnung des Teilstrahlenbündels B bei erster Beugung an der Messteilung |
| $\lambda :=$ | Lichtwellenlänge |
| $d'_{M\ddot{U}} :=$ | Teilungsperiode der Messteilung für den out-of-plane-Betrieb |
| $\beta'_A :=$ | Ablenkwinkel des Teilstrahlenbündels A gegenüber der Einfallsrichtung des einfallenden Strahlenbündels im out-of-plane-Betrieb |
| $\beta'_B :=$ | Ablenkwinkel des Teilstrahlenbündels B gegenüber der Einfallsrichtung des einfallenden Strahlenbündels im out-of-plane-Betrieb |

Aus den Gleichungen 1, 2, 3a und 3b ergeben sich schließlich folgende Bedingungen 4a, 4b für die erfindungsgemäße Positionsmesseinrichtung:

$$-\sin(\alpha) + n_{A1} \cdot \frac{\lambda}{d'_{M\ddot{U}}} = \frac{\lambda}{d_{M\ddot{U}}} \cdot \cos(\alpha) + \sqrt{1 - (\frac{\lambda}{d_M})^2} \cdot \sin(\alpha) \quad \text{(Gl. 4a)}$$

$$-\sin(\alpha) + n_{B1} \cdot \frac{\lambda}{d'_{M\ddot{U}}} = -\frac{\lambda}{d_{M\ddot{U}}} \cdot \cos(\alpha) + \sqrt{1 - (\frac{\lambda}{d_M})^2} \cdot \sin(\alpha) \quad \text{(Gl. 4b)}$$

mit:

| | |
|---|---|
| $\alpha :=$ | Kippwinkel |
| $n_{A1} :=$ | Beugungsordnung des Teilstrahlenbündels A bei erster Beugung an der Messteilung |
| $n_{B1} :=$ | Beugungsordnung des Teilstrahlenbündels B bei erster Beugung an der Messteilung |
| $\lambda :=$ | Lichtwellenlänge |
| $d'_{M\ddot{U}} :=$ | Teilungsperiode der Messteilung für den out-of-plane-Betrieb |
| $d_{M\ddot{U}} :=$ | Teilungsperiode der Messteilung für den in-plane-Betrieb |

Die Gleichungen 4a, 4b können nach dem Kippwinkel $\alpha$ und der Teilungsperiode $d'_{M\ddot{U}}$ der Messteilung aufgelöst werden:

$$d'_{M\ddot{U}} = \frac{1}{2} \sqrt{(n_{A1} - n_{B1})^2 \cdot d_{M\ddot{U}}{}^2 + (n_{A1} + n_{B1})^2 \cdot \frac{\lambda^2}{1 + \sqrt{1 - (\frac{\lambda}{d_{M\ddot{U}}})^2}}} \quad \text{(Gl. 5a)}$$

$$\alpha = \arctan(\frac{n_{A1} + n_{B1}}{n_{A1} - n_{B1}} \cdot \frac{\frac{\lambda}{d_{M\ddot{U}}}}{1 + \sqrt{1 - (\frac{\lambda}{d_{M\ddot{U}}})^2}}) \quad \text{(Gl. 5b)}$$

mit:

| | |
|---|---|
| $d'_{M\ddot{U}} :=$ | Teilungsperiode der Messteilung für den out-of-plane-Betrieb |
| $\alpha :=$ | Kippwinkel |

$n_{A1} :=$      Beugungsordnung des Teilstrahlenbündels A bei erster Beugung an der Messteilung

$n_{B1} :=$      Beugungsordnung des Teilstrahlenbündels B bei erster Beugung an der Messteilung

$\lambda :=$      Lichtwellenlänge

$d_{MÜ} :=$      Teilungsperiode der Messteilung für den in-plane-Betrieb

Die Gleichungen 5a, 5b liefern für jedes asymmetrische Paar $n_{A1}$, $n_{B1}$ ($n_A \neq - n_B$) von Beugungsordnungen einen zugehörigen Kippwinkel $\alpha \neq 0$ und eine Teilungsperiode $d_{MÜ}' \neq d_{MÜ}$, über die gewährleistet ist, dass der Abtaststrahlengang symmetrisch in Bezug auf die Symmetrieebene SE verläuft. Die Symmetrieebene SE bleibt relativ zur Abtasteinheit 20 unverändert und ist relativ zur Maßverkörperung 10' erfindungsgemäß um den Kippwinkel $\alpha$ um eine Drehachse parallel zur Maßverkörperung 10' und senkrecht zur Richtung x des Gittervektors bzw. der Teilungsrichtung x verkippt angeordnet. Die Weglängen der beiden Teilstrahlenbündel A, B bleiben damit gleich lang und die Abtastoptik ist - wie gefordert - auch im out-of-plane-Betrieb mit geneigtem Empfindlichkeitsvektor $\vec{e}$ achromatisch. Das bedeutet, dass dieselbe achromatische Abtastoptik bzw. Abtasteinheit 20 sowohl im bekannten in-plane-Betrieb als auch im erfindungsgemäßen out-of-plane-Betrieb verwendet werden kann. Damit ist eine doppelte Nutzung der entsprechenden Abtasteinheit 20 möglich, die aufwändige Entwicklung einer eigens für den out-of-plane-Betrieb optimierten Abtastoptik ist nicht mehr erforderlich. Dies vereinfacht beispielsweise für einen Maschinenhersteller, der beide Betriebsarten nutzen will, die Logistik erheblich.

Wie zu erwarten, liefern die Gleichungen 5a, 5b für symmetrische Beugungsordnungen $n_A = -n_B$ die triviale Lösung $\alpha = 0$ und $d_{MÜ}' = d_{MÜ}$ des in-plane-Betriebs der bekannten Vorrichtung aus den Figuren 1a - 1c.

Der Empfindlichkeitsvektor $\vec{e}$ ist im out-of-plane-Betrieb um den Kippwinkel $\alpha$ zur Maßverkörperungsoberfläche und zum in x-Richtung verlaufenden Gittervektor der Messteilung 12' geneigt und hat dieselbe Länge wie im in-plane-Betrieb. Das bedeutet dass die Signalperiode $SP_x'$ der erzeugten Abtastsignale für eine Maßverkörperungsverschiebung entlang der x-Richtung und die Signalperiode $SP_z'$ der erzeugten Abtastsignale für eine Maßverkörperungsverschiebung in z-Richtung durch folgende Beziehungen gegeben sind:

$$SP_x' = \frac{SP}{\cos(\alpha)} \quad \text{(Gl. 6a)}$$

$$SP_z' = \frac{SP}{\sin(\alpha)} \quad \text{(Gl. 6b)}$$

mit:

$SP_x' :=$      Signalperiode der erzeugten Abtastsignale für eine Maßverkörperungsverschiebung entlang der x-Richtung

$SP_z' :=$      Signalperiode $SP_z'$ der erzeugten Abtastsignale für eine Maßverkörperungsverschiebung in z-Richtung

$SP :=$      Signalperiode der gleichen Abtastoptik im in-plane-Betrieb

$\alpha :=$      Kippwinkel

Natürlich können bei der resultierenden Beugung an der Messteilung 12' auch andere Kombinationen von Beugungsordnungen für den out-of-plane-Betrieb verwendet werden, solange die Kombinationen entsprechend der Bedingung $n_{A1} = n_{A2} \neq -n_{B1} = -n_{B2}$ nicht-symmetrisch sind. Neben der oben beschriebenen Kombination mit $n_{A1} = n_{A2}$ = +3 und $n_{B1} = n_{B2}$ = -1 ist auch die Kombination nichtsymmetrischer Beugungsordnungen mit $n_{A1} = n_{A2}$ = +1 und $n_{B1} = n_{B2}$ = 0 besonders günstig. Grundsätzlich sind aber auch andere, nicht-symmetrische Kombinationen von Beugungsordnungen einsetzbar, z.B. die Kombinationen $n_{A1} = n_{A2}$ = -3 und $n_{B1} = n_{B2}$ = +1 oder $n_{A1} = n_{A2}$ = +1 und $n_{B1} = n_{B2}$ = 0 etc..

Die Messteilung 12' ist für den out-of-plane-Betrieb der erfindungsgemäßen Positionsmesseinrichtung auf eine hohe Beugungseffizienz der zur Signalerzeugung verwendeten Beugungsordnungen optimiert. Hierzu ist wie oben bereits angedeutet vorgesehen, dass die Messteilung 12 als Überstruktur-Gitter ausgebildet ist. Demzufolge weist die Messteilung 12' eine Überstruktur auf und besitzt innerhalb einer Teilungsperiode $d'_{MÜ}$ im allgemeinen Fall eine gerade Anzahl von mehr als zwei Gittersprungstellen. Im konkreten Ausführungsbeispiel ist die Messteilung 12' als binäres Reflexions-Phasengitter mit einem Phasenhub $\lambda/4$, bzw. in Reflexion $\lambda/2$, ausgeführt, von dem in Figur 3 eine sich über zwei Teilungsperioden $d'_{MÜ}$ erstreckende Teil-Schnittansicht gezeigt ist. Entlang der Messrichtung x wechseln sich hierbei Teilungsbereiche 12.1', 12.2' mit unterschiedlichen phasenschiebenden Wirkungen auf die einfallenden Strahlenbündel ab. Mit dem Bezugszeichen 12.1' werden in Figur 3 die erhöhten Teilungsbereiche bezeichnet, mit dem Bezugszeichen 12.2' die niedrigeren Teilungsbereiche. Die dargestellte Messteilungsvariante 12' besitzt wie ersichtlich pro Teilungsperiode $d'_{MÜ}$ vier Gittersprungstellen G1 - G4, an denen jeweils ein Sprung in der Gitterhöhe von Hoch nach Tief oder umgekehrt vorliegt.

Im dargestellten Ausführungsbeispiel lässt sich die Überstruktur der Messteilung 12' mit Hilfe der Überstrukturparameter a, b, c charakterisieren, die die geometrischen Verhältnisse innerhalb einer Teilungsperiode d'$_{MÜ}$ der Messteilung 12' beschreiben. Hierbei bezeichnet wie in Figur 3 gezeigt der Überstrukturparameter a den Abstand zwischen der ersten Gittersprungstelle G1 und der zweiten Gittersprungstelle G2, der Überstrukturparameter b den Abstand zwischen der zweiten Gittersprungstelle G2 und der dritten Gittersprungstelle G3 und der Überstrukturparameter c den Abstand zwischen der dritten Gittersprungstelle G3 und der vierten Gittersprungstelle G4. Geeignete Parameter eines konkreten Ausführungsbeispiels werden im folgenden noch angegeben. Die in Figur 3 konkret gezeigten Abstände bzw. Überstrukturparameter a, b, c entsprechen hierbei keinem tatsächlichen Messteilungs-Ausführungsbeispiel, sondern dienen lediglich zur Veranschaulichung der geometrischen Bedeutung dieser Größen.

Über die als Überstrukturgitter ausgelegte Messteilung 12' können gezielt diejenigen, aus der Reflexion resultierenden Paare von nicht-symmetrischen Beugungsordnungen erzeugt werden, die zur Signalerzeugung im out-of-plane-Betrieb der erfindungsgemäßen Positionsmesseinrichtung benötigt werden. Dabei kann es sich also beispielsweise um die bereits oben erwähnten Kombinationen aus +1./-2. Beugungsordnung, +2./-3. Beugungsordnung, +1/-3. Beugungsordnung, +3./-1. Beugungsordnung, +1./0. Beugungsordnung, -1./0. Beugungsordnung etc. handeln.

Abhängig von den zu erzeugenden, nicht-symmetrischen Beugungsordnungen n, m wird die erforderliche Teilungsperiode d'$_{MÜ}$ der als Überstrukturgitter ausgebildeten Messteilung 12' für den out-of-plane-Betrieb dabei vorzugsweise gemäß der nachfolgenden Beziehung 7 gewählt, die eine alternative Bestimmungsmöglichkeit zur obigen Gleichung 5 für die Größe d'$_{MÜ}$ darstellt:

$$d'_{MÜ} = d_{MÜ} \cdot (n - m) / (2 \cos \alpha) \qquad (7)$$

mit

$d_{MÜ}$ :=    Teilungsperiode der Messteilung mit Überstruktur für den in-plane-Betrieb
$d'_{MÜ}$ :=    Teilungsperiode der Messteilung mit Überstruktur für den out-of-plane-Betrieb
$\alpha$ :=    Kippwinkel
n, m :=    ....-2, -1, 0, +1, +2,....

Nachfolgend werden konkrete Ausführungsbeispiele für geeignete Messteilungen 12' mit Überstruktur angegeben, die gemäß Figur 3 vier Gittersprungstellen G1 - G4 pro Teilungsperiode d'$_{MÜ}$ aufweisen und in der erfindungsgemäßen Positionsmesseinrichtung einsetzbar sind.

Ausführungsbeispiel 1

Genutzte Beugungsordnungen: +1 / -2
Lichtwellenlänge: 850nm
$d'_{MÜ} = 3.080 \mu m$
$\alpha = 4.143°$
$a = 0.06 \cdot d'_{MÜ}$
$b = 0.31 \cdot d'_{MÜ}$
$c = 0.39 \cdot d'_{MÜ}$

Ausführungsbeispiel 2

Genutzte Beugungsordnungen: +2 / -3
Lichtwellenlänge: 850nm
$d'_{MÜ} = 5.124 \mu m$
$\alpha = 2.488°$
$a = 0.19 \cdot d'_{MÜ}$
$b = 0.20 \cdot d'_{MÜ}$
$c = 0.19 \cdot d'_{MÜ}$

Ausführungsbeispiel 3

Genutzte Beugungsordnungen: +1 / -3
Lichtwellenlänge: 850nm
$d'_{MÜ} = 4.120\mu m$
$\alpha = 6.201°$
$a = 0.08 \cdot d'_{MÜ}$
$b = 0.21 \cdot d'_{MÜ}$
$c = 0.5 \cdot d'_{MÜ}$

Außer den erläuterten Ausführungsbeispielen existieren selbstverständlich noch weitere Möglichkeiten zur Ausbildung der erfindungsgemäßen optischen Positionsmesseinrichtung.

So ist es z.B. möglich, anstelle der oben erläuterten Abtastoptik, auch eine der Abtastoptiken aus der eingangs erwähnten Patentanmeldung Nr. 10 2015 203 188.8 der Anmelderin einzusetzen, die dort als zweites und drittes Ausführungsbeispiel offenbart sind und die Messteilung als Überstruktur-Messteilung auszubilden etc..

**Patentansprüche**

1. Optische Positionsmesseinrichtung zur Erfassung der Position von zwei relativ zueinander beweglichen Objekten mit

   - einer Maßverkörperung (10'), die mit einem der beiden Objekte verbunden ist und eine Messteilung (12') mit einer periodischen Anordnung von Teilungsbereichen entlang mindestens einer Teilungsrichtung umfasst sowie
   - einer mit dem anderen Objekt verbundenen Abtasteinheit (20) mit mehreren optischen Elementen, die beweglich relativ zur Maßverkörperung angeordnet ist, wobei über die Anordnung und Ausbildung der optischen Elemente der Abtasteinheit ein Abtaststrahlengang resultiert, in dem zur Interferenz gelangende Teilstrahlenbündel in Bezug auf eine Symmetrieebene (SE) spiegelsymmetrisch propagieren und entweder V-förmig auf die Maßverkörperung einfallen und/oder eine V-förmige Rückreflexion von der Maßverkörperung erfahren und wobei die Symmetrieebene um einen definierten Kippwinkel ($\alpha$) um eine Drehachse verkippt ist, welche parallel zur Oberfläche der Maßverkörperung orientiert ist und sich senkrecht zur Teilungsrichtung erstreckt,

   **dadurch gekennzeichnet,**
   **dass** die Messteilung (12') eine Überstruktur aufweist und innerhalb einer Teilungsperiode ($d'_{MÜ}$) mehr als zwei Gittersprungstellen (G1 - G4) besitzt, wobei die Gittersprungstellen (G1 - G4) innerhalb einer Teilungsperiode ($d'_{MÜ}$) unsymmetrisch angeordnet sind.

2. Optische Positionsmesseinrichtung nach Anspruch 1, **dadurch gekennzeichnet, dass** die Messteilung (12') innerhalb einer Teilungsperiode ($d'_{MÜ}$) eine gerade Anzahl von Gittersprungstellen (G1 - G4) besitzt.

3. Optische Positionsmesseinrichtung nach Anspruch 1, **dadurch gekennzeichnet, dass** die Messteilung (12') derart ausgebildet ist, dass Teilstrahlenbündel zur Interferenz gelangen, die aus nicht-symmetrischen Beugungsordnungen (n, m) an der Messteilung (12') resultieren und die Teilungsperiode ($d'_{MÜ}$) der Messteilung (12') gemäß

$$d'_{MÜ} = d_{MÜ} \cdot (n - m) / (2 \cos \alpha)$$

gewählt ist, mit

$d_{MÜ} :=$ Teilungsperiode der Messteilung mit Überstruktur für den in-plane-Betrieb
$d'_{MÜ} :=$ Teilungsperiode der Messteilung mit Überstruktur für den out-of-plane Betrieb
$\alpha :=$ Kippwinkel
$n, m := ....-2, -1, 0, +1, +2,....$

4. Optische Positionsmesseinrichtung nach Anspruch 3, **dadurch gekennzeichnet, dass** Teilstrahlenbündel zur Interferenz gelangen, die aus einer der folgenden Kombinationen von Beugungsordnungen an der Messteilung (12') resultieren

+1. / -2. Beugungsordnung,
+2. / -3. Beugungsordnung,
+1. / -3. Beugungsordnung,
+3. / -1. Beugungsordnung,
+1. / 0. Beugungsordnung,
-1. / 0. Beugungsordnung.

**5.** Optische Positionsmesseinrichtung nach mindestens einem der vorangehenden Ansprüche, **dadurch gekennzeichnet, dass** die Messteilung (12') als binäres Reflexions-Phasengitter ausgebildet ist.

**6.** Optische Positionsmesseinrichtung nach Anspruch 5, **dadurch gekennzeichnet, dass** das binäre Reflexions-Phasengitter einen Phasenhub von $\lambda/4$ aufweist.

**7.** Optische Positionsmesseinrichtung nach mindestens einem der vorangehenden Ansprüche, **dadurch gekennzeichnet, dass** Teilstrahlenbündel zur Interferenz gelangen, die aus einer Kombination der +1. Beugungsordnung und der -2. Beugungsordnung an der Messteilung resultieren und wobei bei einer genutzten Lichtwellenlänge $\lambda$ = 850nm die Teilungsperiode ($d'_{MÜ}$) der Messteilung (12'), der Kippwinkel ($\alpha$) der Symmetrieebene sowie die Überstrukturparameter (a, b, c) der Messteilung (12') mit vier Gittersprungstellen (G1 - G4) pro Teilungsperiode ($d'_{MÜ}$) folgendermaßen gewählt sind

$d'_{MÜ}$ = 3.080$\mu$m
$\alpha$ = 4.143°
a = 0.06 • $d'_{MÜ}$ (Abstand zwischen erster Gittersprungstelle G1 und zweiter Gittersprungstelle G2)
b = 0.31 • $d'_{MÜ}$ (Abstand zwischen zweiter Gittersprungstelle G2 und dritter Gittersprungstelle G3)
c = 0.39 • $d'_{MÜ}$ (Abstand zwischen dritter Gittersprungstelle G3 und vierter Gittersprungstelle G4)

**8.** Optische Positionsmesseinrichtung nach mindestens einem der Ansprüche 1 - 6, **dadurch gekennzeichnet, dass** Teilstrahlenbündel zur Interferenz gelangen, die aus einer Kombination der +2. Beugungsordnung und der -3. Beugungsordnung an der Messteilung (12') resultieren und wobei bei einer genutzten Lichtwellenlänge $\lambda$ = 850nm die Teilungsperiode ($d'_{MÜ}$) der Messteilung (12'), der Kippwinkel ($\alpha$) der Symmetrieebene sowie die Überstrukturparameter (a, b, c) der Messteilung mit vier Gittersprungstellen (G1 - G4) pro Teilungsperiode ($d'_{MÜ}$) folgendermaßen gewählt sind

$d'_{MÜ}$ = 5.124$\mu$m
$\alpha$ = 2.488°
a = 0.19 • $d_{MÜ}$ (Abstand zwischen erster Gittersprungstelle G1 und zweiter Gittersprungstelle G2)
b = 0.20 • $d_{MÜ}$ (Abstand zwischen zweiter Gittersprungstelle G2 und dritter Gittersprungstelle G3)
c = 0.19 • $d_{MÜ}$ (Abstand zwischen dritter Gittersprungstelle G3 und vierter Gittersprungstelle G4)

**9.** Optische Positionsmesseinrichtung nach mindestens einem der Ansprüche 1 - 6, **dadurch gekennzeichnet, dass** Teilstrahlenbündel zur Interferenz gelangen, die aus einer Kombination der +1. Beugungsordnung und der -3. Beugungsordnung an der Messteilung (12') resultieren und wobei bei einer genutzten Lichtwellenlänge $\lambda$ = 850nm die Teilungsperiode ($d'_{MÜ}$) der Messteilung (12'), der Kippwinkel ($\alpha$) der Symmetrieebene sowie die Überstrukturparameter (a, b, c) der Messteilung mit vier Gittersprungstellen (G1 - G4) pro Teilungsperiode ($d_{MÜ}$) folgendermaßen gewählt sind

$d_{MÜ}$ = 4.120$\mu$m
$\alpha$ = 6.201°
a = 0.08 • $d_{MÜ}$ (Abstand zwischen erster Gittersprungstelle G1 und zweiter Gittersprungstelle G2)
b = 0.21 • $d_{MÜ}$ (Abstand zwischen zweiter Gittersprungstelle G2 und dritter Gittersprungstelle G3)
c = 0.5 • $d_{MÜ}$ (Abstand zwischen dritter Gittersprungstelle G3 und vierter Gittersprungstelle G4)

**Claims**

**1.** Optical position measuring device for detecting the position of two objects that are movable relative to one another, comprising

- a material measure (10'),

which is connected to one of the two objects and comprises a measurement graduation (12') having a periodic arrangement of graduation regions along at least one graduation direction, and

- a scanning unit (20) having a plurality of optical elements, said scanning unit being connected to the other object and being arranged movably relative to the material measure, wherein the arrangement and configuration of the optical elements of the scanning unit result in a scanning beam path in which partial beams acting in interference propagate mirror-symmetrically with respect to a plane of symmetry (SE) and either are incident in a V-shaped manner on the material measure and/or experience a V-shaped backreflection from the material measure, and wherein the plane of symmetry is tilted by a defined tilt angle ($\alpha$) about a rotation axis which is oriented parallel to the surface of the material measure and extends perpendicularly to the graduation direction,

**characterized**

**in that** the measurement graduation (12') has a superstructure and has more than two grating discontinuities (G1-G4) within a graduation period ($d'_{M\ddot{U}}$), wherein the grating discontinuities (G1-G4) are arranged asymmetrically within a graduation period ($d'_{M\ddot{U}}$).

2. Optical position measuring device according to Claim 1, **characterized in that** the measurement graduation (12') has an even number of grating discontinuities (G1-G4) within a graduation period ($d'_{M\ddot{U}}$).

3. Optical position measuring device according to Claim 1, **characterized in that** the measurement graduation (12') is configured in such a way that partial beams attain interference which result from non-symmetrical orders of diffraction (n, m) at the measurement graduation (12') and the graduation period ($d'_{M\ddot{U}}$) of the measurement graduation (12') is chosen in accordance with

$$d'_{M\ddot{U}} = d_{M\ddot{U}} + (n - m)/(2 \cos \alpha)$$

where

$d_{M\ddot{U}}$ := graduation period of the measurement graduation with superstructure for in-plane operation
$d'_{M\ddot{U}}$ := graduation period of the measurement graduation with superstructure for out-of-plane operation
$\alpha$ := tilt angle
n, m := ... -2, -1, 0, +1, +2, ...

4. Optical position measuring device according to Claim 3, **characterized in that** partial beams attain interference which result from one of the following combinations of orders of diffraction at the measurement graduation (12')

+1st/-2nd order of diffraction,
+2nd/-3rd order of diffraction,
+1st/-3rd order of diffraction,
+3rd/-1st order of diffraction,
+1st/0th order of diffraction,
-1st/0th order of diffraction.

5. Optical position measuring device according to at least one of the preceding claims, **characterized in that** the measurement graduation (12') is configured as a binary reflection phase grating.

6. Optical position measuring device according to Claim 5, **characterized in that** the binary reflection phase grating has a phase deviation of $\lambda/4$.

7. Optical position measuring device according to at least one of the preceding claims, **characterized in that** partial beams attain interference which result from a combination of the +1st order of diffraction and the -2nd order of diffraction at the measurement graduation and wherein, during a used light wavelength $\lambda = 850$ nm, the graduation period ($d'_{M\ddot{U}}$) of the measurement graduation (12'), the tilt angle ($\alpha$) of the plane of symmetry and also the superstructure parameters (a, b, c) of the measurement graduation (12') having four grating discontinuities (G1-G4) per measurement graduation ($d'_{M\ddot{U}}$) are chosen as follows

$d'_{M\ddot{U}} = 3.080 \ \mu m$

$\alpha$ = 4.143$\underline{o}$

a = 0.06 • d'$_{MÜ}$ (distance between first grating discontinuity G1 and second grating discontinuity G2)

b = 0.31 • d'$_{MÜ}$ (distance between second grating discontinuity G2 and third grating discontinuity G3)

c = 0.39 • d'$_{MÜ}$ (distance between third grating discontinuity G3 and fourth grating discontinuity G4)

8. Optical position measuring device according to at least one of Claims 1-6, **characterized in that** partial beams attain interference which result from a combination of the +2$^{nd}$ order of diffraction and the -3$^{rd}$ order of diffraction at the measurement graduation (12') and wherein, given a used light wavelength $\lambda$ = 850 nm, the graduation period (d'$_{MÜ}$) of the measurement graduation (12'), the tilt angle ($\alpha$) of the plane of symmetry and also the superstructure parameters (a, b, c) of the measurement graduation having four grating discontinuities (G1-G4) per graduation period (d'$_{MÜ}$) are chosen as follows

d'$_{MÜ}$ = 5.124 $\mu$m

$\alpha$ = 2.488$\underline{o}$

a = 0.19 • d'$_{MÜ}$ (distance between first grating discontinuity G1 and second grating discontinuity G2)

b = 0.20 • d'$_{MÜ}$ (distance between second grating discontinuity G2 and third grating discontinuity G3)

c = 0.19 • d'$_{MÜ}$ (distance between third grating discontinuity G3 and fourth grating discontinuity G4)

9. Optical position measuring device according to at least one of Claims 1-6, **characterized in that** partial beams attain interference which result from a combination of the +1$^{st}$ order of diffraction and the -3$^{rd}$ order of diffraction at the measurement graduation (12') and wherein, given a used light wavelength $\lambda$ = 850 nm, the graduation period (d'$_{MÜ}$) of the measurement graduation (12'), the tilt angle ($\alpha$) of the plane of symmetry and also the superstructure parameters (a, b, c) of the measurement graduation having four grating discontinuities (G1-G4) per graduation period (d'$_{MÜ}$) are chosen as follows

d'$_{MÜ}$ = 4.120 $\mu$m

$\alpha$ = 6.201$\underline{o}$

a = 0.08 • d'$_{MÜ}$ (distance between first grating discontinuity G1 and second grating discontinuity G2)

b = 0.21 • d'$_{MÜ}$ (distance between second grating discontinuity G2 and third grating discontinuity G3)

c = 0.5 • d'$_{MÜ}$ (distance between third grating discontinuity G3 and fourth grating discontinuity G4)


**Revendications**

1. Mécanisme optique de mesure de la position, destiné à la détermination de la position de deux objets, lesquels sont mobiles l'un par rapport à l'autre, avec :

- une matérialisation d'une grandeur (10'), laquelle est reliée à l'un des deux objets, et laquelle comprend une graduation de la mesure (12) avec une disposition périodique de zones de séparation le long d'au moins une direction de séparation ; ainsi qu'avec :
- une unité de balayage (20) avec plusieurs éléments optiques, laquelle est reliée à l'autre objet, et laquelle est disposée de manière mobile par rapport à la matérialisation de la grandeur ;

selon lequel une trajectoire des faisceaux de balayage en résulte par l'intermédiaire de la disposition et de la formation des éléments optiques de l'unité de balayage, dans laquelle trajectoire se propagent des faisceaux de rayons partiels, de manière symétrique en image miroir par rapport à un plan de symétrie (SE), lesquels sont amenés en interférence et lesquels sont soit incidents en forme de « V » sur la matérialisation de la grandeur, et/ou soit subissent une réflexion en retour, en forme de « V », du fait de la matérialisation de la grandeur ; et

selon lequel le plan de symétrie est basculé d'un angle de basculement ($\alpha$) défini autour d'un axe de rotation, lequel est orienté de manière parallèle par rapport à la surface de la matérialisation de la grandeur, et lequel s'étend de manière perpendiculaire à la direction de séparation,

**caractérisé en ce que**

la graduation de la mesure (12') présente une superstructure et possède plus de deux points de saut de grille (G1 à G4) au sein d'une période de séparation (d'$_{MÜ}$) ;

selon lequel les points de saut de grille (G1 à G4) sont disposés de manière non symétrique au sein d'une période de séparation (d'MÜ).

2. Mécanisme optique de mesure de la position selon la revendication 1, **caractérisé en ce que** la graduation de la mesure (12') possède un nombre égal de points de saut de grille (G1 à G4) au sein d'une période de séparation (d'MÜ).

3. Mécanisme optique de mesure de la position selon la revendication 1, **caractérisé en ce que** la graduation de la mesure (12') est conçue de telle sorte que des faisceaux de rayons partiels sont amenés en interférence, lesquels résultent des ordres de diffraction non symétriques (n, m) au niveau de la graduation de la mesure (12') ; et **caractérisé en ce que** la graduation de la mesure (12') est conçue de telle sorte que la période de séparation (d'MÜ) de la graduation de la mesure (12') est sélectionnée en fonction de :

$$\text{d'MÜ = dMÜ} \bullet \text{(n - m) / (2 cos } \alpha \text{) ;}$$

où :

- dMÜ : = la période de séparation de la graduation de la mesure, avec une superstructure pour l'exploitation conformément au plan ;
- d'MÜ : = la période de séparation de la graduation de la mesure, avec une superstructure pour l'exploitation exécutée de manière non conforme au plan ;
- $\alpha$ : = l'angle de basculement ;
- n, m : = .... -2, -1, 0, +1, +2, ....

4. Mécanisme optique de mesure de la position selon la revendication 3, **caractérisé en ce que** des faisceaux de rayons partiels sont amenés en interférence, lesquels résultent de l'une des combinaisons suivantes des ordres de diffraction au niveau de la graduation de la mesure (12') :

- ordre de diffraction +1. / -2. ;
- ordre de diffraction +2. / -3. ;
- ordre de diffraction +1. / -3. ;
- ordre de diffraction +3. / -1. ;
- ordre de diffraction +1. / 0. ;
- ordre de diffraction -1. / 0.

5. Mécanisme optique de mesure de la position selon au moins l'une des revendications précédentes, **caractérisé en ce que** la graduation de la mesure (12') est conçue sous la forme d'un réseau de phase binaire de réflexion.

6. Mécanisme optique de mesure de la position selon la revendication 5, **caractérisé en ce que** le réseau de phase binaire de réflexion présente une déviation de phase de $\lambda/4$.

7. Mécanisme optique de mesure de la position selon au moins l'une des revendications précédentes, **caractérisé en ce que** des faisceaux de rayons partiels sont amenés en interférence, lesquels résultent d'une combinaison de l'ordre de diffraction +1. et de l'ordre de diffraction -2., au niveau de la graduation de la mesure ; et selon lequel, pour une longueur d'onde utilisée de la lumière $\lambda$ = 850 nm, la période de séparation (d'MÜ) de la graduation de la mesure (12'), l'angle de basculement ($\alpha$) du plan de symétrie, ainsi que les paramètres de la superstructure (a, b, c) de la graduation de la mesure (12') sont sélectionnés comme suit, avec quatre points de saut de grille (G1 à G4) par période de séparation (d'MÜ) :

- d'MÜ = 3,080 $\mu$m ;
- $\alpha$ = 4,143° ;
- a = 0,06 • d'MÜ (la distance entre le premier point de saut de grille G1 et le deuxième point de saut de grille G2) ;
- b = 0,31 • d'MÜ (la distance entre le deuxième point de saut de grille G2 et le troisième point de saut de grille G3) ;
- c = 0,39 • d'MÜ (la distance entre le troisième point de saut de grille G3 et le quatrième point de saut de grille G4).

8. Mécanisme optique de mesure de la position selon au moins l'une des revendications 1 à 6, **caractérisé en ce que** des faisceaux de rayons partiels sont amenés en interférence, lesquels résultent d'une combinaison de l'ordre de diffraction +2. et de l'ordre de diffraction -3., au niveau de la graduation de la mesure (12') ; et selon lequel, pour une longueur d'onde utilisée de la lumière $\lambda$ = 850 nm, la période de séparation (d'MÜ) de la graduation de la mesure (12'), l'angle de basculement ($\alpha$) du plan de symétrie, ainsi que les paramètres de la superstructure (a, b, c) de la graduation de la mesure sont sélectionnés comme suit, avec quatre points de saut de grille (G1 à G4) par période de séparation (d'MÜ) :

- d'MÜ = 5,124 μm ;
- α = 2,488° ;
- a = 0,19 - dMÜ (la distance entre le premier point de saut de grille G1 et le deuxième point de saut de grille G2) ;
- b = 0,20 • dMÜ (la distance entre le deuxième point de saut de grille G2 et le troisième point de saut de grille G3)
- c = 0,19 • dMÜ (la distance entre le troisième point de saut de grille G3 et le quatrième point de saut de grille G4).

9. Mécanisme optique de mesure de la position selon au moins l'une des revendications 1 à 6, **caractérisé en ce que** des faisceaux de rayons partiels sont amenés en interférence, lesquels résultent d'une combinaison de l'ordre de diffraction +1. et de l'ordre de diffraction -3., au niveau de la graduation de la mesure (12') ; et selon lequel, pour une longueur d'onde utilisée de la lumière λ = 850 nm, la période de séparation (d'MÜ) de la graduation de la mesure (12'), l'angle de basculement (α) du plan de symétrie, ainsi que les paramètres de la superstructure (a, b, c) de la graduation de la mesure sont sélectionnés comme suit, avec quatre points de saut de grille (G1 à G4) par période de séparation (dMÜ) :

- dMÜ = 4,120 μm ;
- α = 6,201° ;
- a = 0,08 • dMÜ (la distance entre le premier point de saut de grille G1 et le deuxième point de saut de grille G2) ;
- b = 0,21 • dMÜ (la distance entre le deuxième point de saut de grille G2 et le troisième point de saut de grille G3) ;
- c = 0,5 • dMÜ (la distance entre le troisième point de saut de grille G3 et le quatrième point de saut de grille G4) .

Fig. 1a          Fig. 1b          Fig. 1c

Fig. 2a

Fig. 2b

Fig. 2c

EP 3 258 220 B1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1762828 A2
- DE 102015203188
- US 20120050748 A
- EP 2848899 A2
- WO 102015203188 A